# EUROPEAN PATENT APPLICATION

(11) **EP 0 605 740 A1**
(43) Date of publication of application: **13.07.1994**
(21) Application number: 93916210.3
(22) Date of filing: 22.07.1993
(51) Int. Cl.: B65G 47/91, B65G 47/94

(54) **SYSTEM FOR CONVEYING ARTICLES**

(30) Priority: 24.07.1992 JP 198023/92
(71) Applicant: ISHIDA CO., Ltd., Kyoto-shi, Kyoto 606 (JP)
(72) Inventor: KITAGAWA, Kazumi, Ishida Co. Ltd., Kurita-gun, Shiga 520-30 (JP); MURAKAMI, Katsuhiko, Ishida Co. Ltd., Osaka-shi, Osaka 530 (JP)
(74) Representative: Pellmann, Hans-Bernd, Dipl.-Ing.
(86) International application number: JP9301027
(87) International publication number: WO9402394

(57) **Abstract**

A system for transferring from a conveyor (1) to a position downwardly of the conveyor, wherein time required for the transfer is shortened and, even if the holding function of a holder (4) lowers, the conveyor (1) is opened to automatically discharge articles (M) from the conveyor (1), so that manual labor of a worker can be dispensed with. The conveyor (1) is openably set, in a closed state, the conveyor (1) is positioned on a conveying path (A) to convey articles (M) to a predetermined position, and, in an opened state, the conveyor (1) is formed with an opening (AH) vertically extending through the conveying path (A). A transferring means (D3) transfers articles (M) through the opening (AH) to a predetermined position, while the conveyor (1) is opened.

## Description

### FIELD OF THE INVENTION

The present invention relates to a package transport apparatus of a type utilizable in transferring a plurality of bags of articles such as, for example, food items from a transport conveyor into a receptacle such as a box or the like.

### BACKGROUND ART

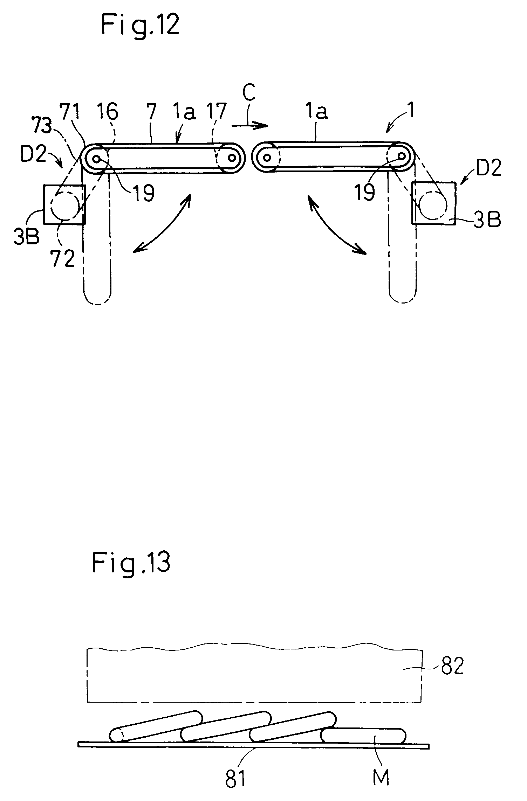

A package transport apparatus of the type referred to above has hitherto been known, having such a structure as shown in Fig. 13. As shown therein, sealed bags M containing articles are successively transported by a transport conveyor 81 towards a packing position where a receptacle (not shown) is positioned laterally beneath the transport conveyor 81. As the sealed bags M being transported reaches the packing position, the sealed bags M are caught under suction by a suction unit 82 having been lowered, and are then lifted above the transport conveyor 81 upon elevation of the suction unit 82. The suction unit 82 carrying the sealed bags M moves horizontally in a direction laterally of the transport conveyor 81 to a position immediately above the receptacle then opened upwardly and is subsequently lowered towards the receptacle so that, upon release of a suction force, the suction unit 82 drops the sealed bags M into the receptacle. This type of package transport apparatus is disclosed in, for example, the Japanese Laid-open Patent Publication No. 64-84806, published March 30, 1989.

With the prior art package transport apparatus of the type discussed above, the suction unit 82 undergoes a complicated motion of lifting the sealed bags M upwardly from the transport conveyor 81, shifting them horizontally to the position immediately above the receptacle and lowering them so as to fall into the receptacle, Because of this complicated motion, the prior art package transport apparatus requires a substantially increased length of time to complete the transfer of the sealed bags M from the transport conveyor 81 and into the receptacle and the work efficiency thereof is therefore low. In addition, in the event that the suction unit 82 fails to operate properly by some reason or fails to provide a sufficient sucking force to hold the sealed bags M under suction, some or all of the sealed bags M may be left on the transport conveyor 81 and, in such case, the attendant worker has to remove the sealed bags M manually from the transport conveyor 81.

On the other hand, the Japanese Laid-open Patent Publication No. 60-77811, published May 2, 1985, discloses the use of a shutter assembly capable of being selectively opened and closed and positioned downstream of the transport conveyor with respect to the direction of transport of articles. According to this publication, after the articles have been transported onto the shutter assembly from the transport conveyor, the shutter assembly is opened to allow the articles to fall downwardly therethrough into the receptacle. While the transport apparatus utilizing the shutter assembly is satisfactory in that the above discussed problems can be substantially eliminated, the use of the shutter assembly separate from the transport conveyor renders the apparatus as a whole to be bulky and complicated in structure. In addition, the transport apparatus utilizing the shutter assembly has an additional problem in that, since during the opening of the shutter assembly the articles are allowed to fall by gravity into the receptacle, the articles having fallen into the receptacle cannot be laid in order.

### DISCLOSURE OF THE INVENTION

The present invention has been devised to substantially eliminate the above discussed problems inherent in the prior art suction transport apparatuses and has for its essential object to provide an improved package transport apparatus which is relatively compact and simple in structure; which does not take a substantial time to transport the articles under suction and has therefore a high work efficiency; which even though the suction unit used therein may fail to operate properly by some reason or may fail to provide a sufficient sucking force to hold the articles under suction, the articles can be automatically discharged from the transport conveyor by opening the transport conveyor, without requiring the attendant worker to exercise a manual job of removing them from the transport conveyor; and which is effective to allow the articles to be transported orderly towards a predetermined position beneath a path of conveyance.

In order to accomplish the foregoing object, the present invention provides a package transport apparatus which comprises a transport conveyor capable of being selectively opened and closed, a open/close drive means for selectively opening and closing the transport conveyor, and a conveyor drive means for driving the transport conveyor. The transport conveyor when closed is positioned on the path of conveyance for transporting the articles towards a predetermined position. However, the transport conveyor when opened forms an opening transversely extending across the path of conveyance. The package transport apparatus also comprises a delivery means for holding the articles, which have been transported to the predetermined position, and also for delivering the articles through the opening towards a predetermined site when the transport conveyor is opened.

With this construction, the delivery means holds the articles transported by the transport conveyor and for delivering the articles directly towards the predetermined site immediately below the opening of the transport conveyor when the transport conveyor is opened, without transferring them upwardly and then laterally. Accordingly, the time required to transfer the articles is advantageously reduced, accompanied by a increase in work efficiency. In addition, even though the suction holder may fail to operate properly by some reason or may fail to provide a sufficient sucking force necessary to hold the articles under suction, the opening of the transport conveyor allows the articles to be automatically discharged downwardly from the transport conveyor without requiring the attendant worker to exercise a manual job of removing the articles from the transport conveyor.

Moreover, the delivery means is operable to deliver the articles while holding them under suction. Therefore, unlike the case in which the articles are allowed to fall by gravity, it is possible to transfer the articles in a orderly rectified fashion towards the predetermined site beneath the transport conveyor. The delivery means employed in the apparatus of the present invention merely undergoes a up-and-down motion. For this reason, not only is the structure simplified, but no separate shutter assembly for allowing the articles to fall is required since the transport conveyor itself is capable of selectively opened and closed. These features make it possible to simplify the structure of the apparatus and also to render the apparatus as a whole to be compact in size.

According to one preferred embodiment of the present invention, the transport conveyor comprises a pair of conveyor halves juxtaposed in a direction transverse to the direction of transport of the articles. Each of the conveyor halves has first and second longitudinal side portions, and the respective first longitudinal side portions of these conveyor halves are operatively supported by associated rotatable shafts extending in a direction parallel to the direction of transport of the articles while the respective second longitudinal side portions of the conveyor halves are adjoining with each other.

According to this preferred embodiment, since the width of each conveyor halves as measured in a direction radially of the associated rotatable shaft is reduced, the time required for the conveyor halves to be selectively opened and closed is advantageously reduced. Also, since a longitudinal center area of the path of conveyance is defined by the second longitudinal side portions of the respective conveyor halves, and since when the transport conveyor is opened that longitudinal center area of the path of conveyance is opened earlier than the remaining area of the path of conveyance, lowering of the articles subsequently performed by the delivery means can be performed at an earlier timing, and the work efficiency is therefore increased.

According to an alternative preferred embodiment of the present invention, each of the transport conveyor halves includes a conveyor belt for the support of the articles thereon during the transportation, and the conveyor drive means includes a drive belt which is, when the transport conveyor is opened, disengaged from the conveyor belt, but which is, when the transport conveyor is closed, brought into engagement with the conveyor belt to drive the latter.

According to the alternative preferred embodiment, since the transport conveyor is automatically disengaged from the conveyor drive means when it is opened, but is automatically drivingly coupled with the conveyor drive means when it is closed, no extra means for selectively coupling and decoupling the transport conveyor with and from the conveyor drive means is required, thereby rendering the apparatus as a whole to be simple in structure.

According to a further preferred embodiment of the present invention, the delivery means includes a rotary screw rod extending vertically and a holder threadingly mounted on the rotary screw rod for movement along the rotary screw rod.

According to this further preferred embodiment, the delivery means can be manufactured simple in structure and, in addition, since the holder moves up and down along the rotary screw rod as the latter is rotated, the up-and-down motion of the holder can be performed accurately and smoothly.

### BRIEF DESCRIPTION OF THE DRAWINGS

The present invention will now be described in detail in connection with some preferred embodiments thereof with reference to the accompanying drawings in which like parts are designated by like reference numerals and in which:
Fig. 1 is a top plan view showing a package transport apparatus according to a first preferred embodiment of the present invention;
Fig. 2 is a cross-sectional view taken along the line 2-2 in Fig. 1;
Fig. 3 is a cross-sectional view taken along the line 3-3 in Fig. 2.
Fig. 4 is a side view showing a delivery means used in the first preferred embodiment of the present invention;
Fig. 5 is a front elevational view of an important portion of a transport conveyor used in the first preferred embodiment of the present invention, said transport conveyor being shown in a closed position;
Fig. 6 is a front elevational view of that important portion of the transport conveyor used in the first preferred embodiment of the present invention, said transport conveyor being shown in an opened position;
Fig. 7 is a front elevational view showing the transport conveyor of the package transport apparatus according to a second preferred embodiment of the present invention;
Fig. 8 is a top plan view showing the transport conveyor used in the second preferred embodiment of the present invention;
Fig. 9 is a front elevational view showing the transport conveyor of the package transport apparatus according to a third preferred embodiment of the present invention;
Fig. 10 is a front elevational view showing the transport conveyor of the package transport apparatus according to a fourth preferred embodiment of the present invention;
Fig. 11 is a top plan view showing the transport conveyor used in the fourth preferred embodiment of the present invention;
Fig. 12 is a side view showing the transport conveyor of the package transport apparatus according to a fifth preferred embodiment of the present invention; and
Fig. 13 is a side view showing a portion of the prior art package transport apparatus.

### BEST MODE FOR CARRYING OUT THE INVENTION

Hereinafter, some preferred embodiments of the present invention will be described with reference to the accompanying drawings.

### First Preferred Embodiment

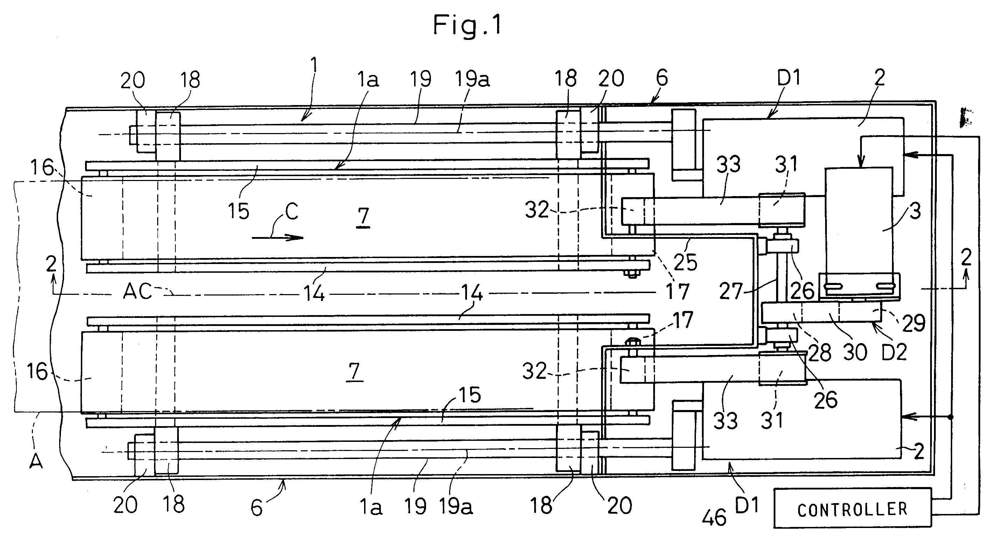

A package transport apparatus according to a first preferred embodiment of the present invention is shown in Figs. 1 to 6. Referring particularly to Fig. 1, the package transport apparatus includes a transport conveyor 1 for transporting a plurality of articles such as sealed bags containing, for example, food items. The transport conveyor 1 is divided into two conveyor components and is therefore comprised of a pair of conveyor halves 1a of an substantially identical construction. These conveyor halves 1a extending parallel to each other are juxtaposed in a direction perpendicular to the direction C of transport of the articles while defining a longitudinal center line AC of the path A of conveyance of the articles therebetween. Each of the conveyor halves 1a has first (outer) and second (inner) longitudinal side portions opposite to each other with the second longitudinal side portion confronting to the other of the conveyor halves 1a and the first longitudinal side portion pivotally mounted on a machine framework 6, so that the transport conveyor 1 as a whole can be selectively opened and closed in a fashion similar to the selective opening and closure of a double casement window.

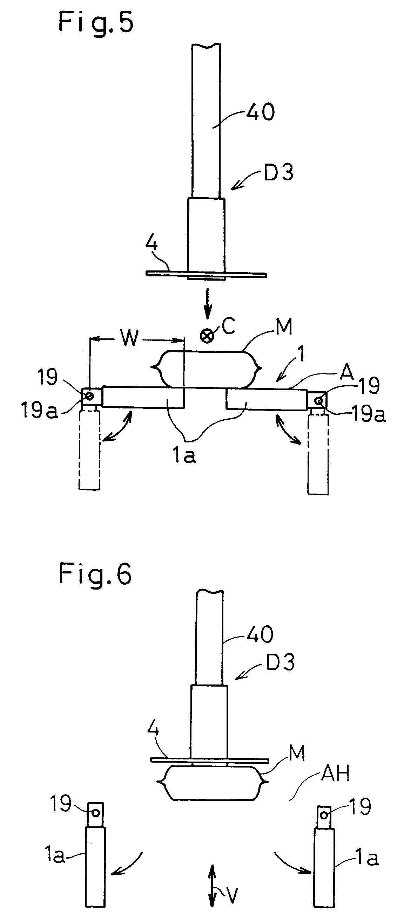

Each conveyor half 1a includes inner and outer side frames 14 and 15, a pair of support rolls 16 and 17 spaced a distance from each other in a longitudinal direction of the transport conveyor 1 and supported by the inner and outer side frames 14 and 15 so as to straddle therebetween, and a generally endless conveyor belt 7 trained between the support rolls 16 and 17. The outer side frame 15 of each conveyor half 1a is formed with a plurality of, for example, two, stays 18 which protrude laterally outwardly therefrom and are in turn rigidly mounted on the associated rotary shaft 19 extending parallel to the direction C of transport of the articles. The rotary shaft 19 for each of the conveyor halves 1a is supported by support brackets 20 fixed to the machine framework 6 for rotation about a longitudinal axis 19a thereof. This rotary shaft 19 is adapted to be driven by a respective first drive unit 2 in the form of, for example, an electric drive motor, so that the associated conveyor half 1a can be selectively pivoted about the longitudinal axis 19a of the respective rotary shaft 19 between a closed position, shown by the solid line in Fig. 5, and an opened position shown by the solid line in Fig. 6. Thus, it will readily be seen that the transport conveyor 1 can transport the articles along the path A of conveyance towards a predetermined site when closed, but forms, when opened, an opening AH opening across the path A of conveyance in a direction V perpendicular to the plane of such path A.

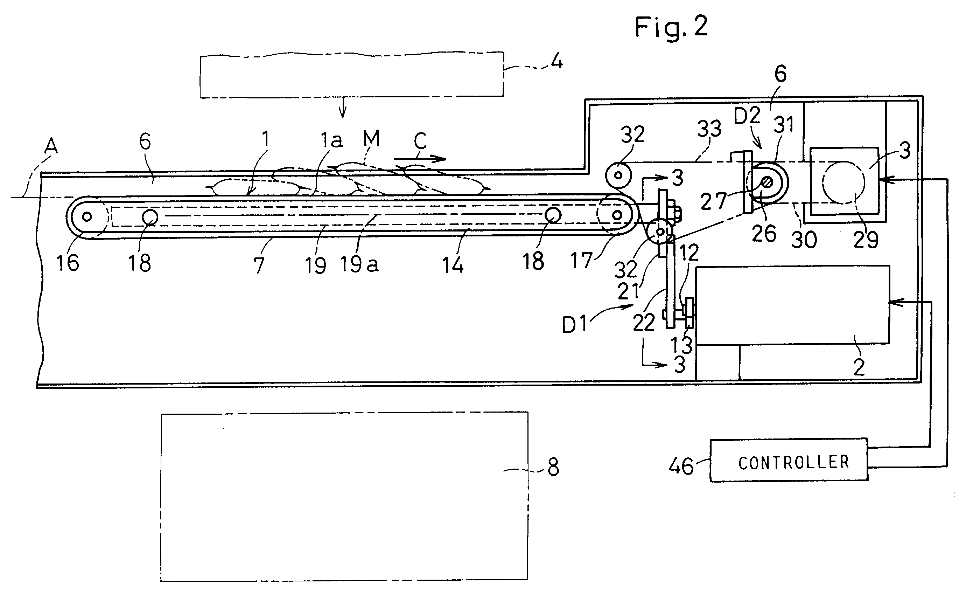

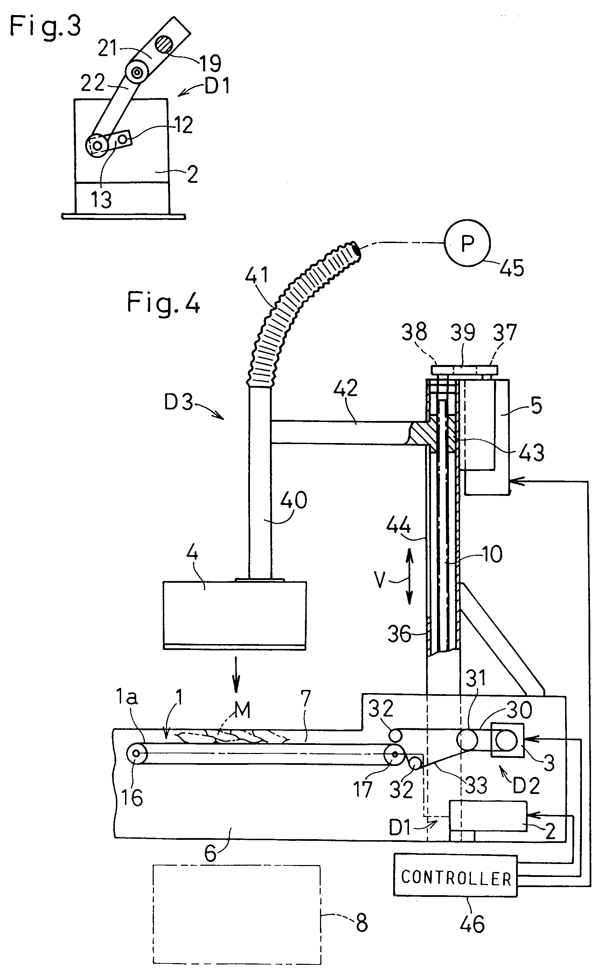

For selectively driving the conveyor halves 1a between the opened and closed positions, an open/close drive means D1 is employed in association with each of the conveyor halves 1a. As best shown in Figs. 2 and 3, the open/close drive means D1 for each conveyor half 1a includes a first cranking member 13 rigidly connected at one end with a drive shaft 12 of the associated first drive unit 2, a second cranking member 21 coupled rigidly at one end with one end of the associated rotary shaft 19 and a connecting link 22 connected rotatably at one end with the other end of the first cranking member 13 and also rotatably at the other end with the other end of the second cranking member 21.

A conveyor drive means D2 for driving both of the conveyor belts 7 of the conveyor halves 1a simultaneously is positioned substantially downstream of the transport conveyor 1 with respect to the direction C of transport. This conveyor drive means D2 is of a construction which will now be described.

The machine framework 6 has a second drive unit 3 in the form of, for example, an electrically operated servo-motor. An auxiliary support frame 25 forming a part of the machine framework 6 is interposed between the second drive unit 3 and the transport conveyor 1. This auxiliary support frame 25 has a pair of support brackets 26 rigidly secured thereto so as to protrude towards the second drive unit 3. A transverse rotary shaft 27 having a driven pulley 28 rigidly mounted thereon for rotation together therewith is rotatably supported at its opposite end portions by the support brackets 26. The driven pulley 28 is in turn drivingly coupled by means of a generally endless drive belt 30 with a drive pulley 29 rigidly mounted on a drive shaft of the second drive unit 3. The transverse rotary shaft 27 has its opposite end extremities protruding outwardly from the respective support brackets 26 and has drive rolls 31 rigidly mounted on the respective end extremities thereof for rotation together therewith. The auxiliary support frame 25 also has two pairs of driven rolls 32 rotatably carried thereby at respective locations adjacent downstream ends of the associated conveyor halves 1a. The driven rolls 32 of each pair are drivingly coupled with the respective drive roll 31 by means of a generally endless drive belt 33 that is trained around the associated drive roll 31 and the driven rolls 32 of the respective pair. The driven rolls 32 of each pair are so positioned that, when the transport conveyor 1 is opened, that is, when the associated conveyor half 1a is held in the opened position as shown in Fig. 6, a portion of the associated drive belt 33 is disengaged from the adjacent conveyor belt 7, but when the transport conveyor 1 is closed, that is, when the associated conveyor half 1a is held in the closed position as shown by the solid line in Fig. 5, that portion of the associated drive belt 33 is frictionally engaged with the adjacent conveyor belt 7 to transmit the drive of the second drive unit 3 to the adjacent conveyor belt 7 to drive the latter. As best shown in Fig. 1, and as described above, the drive belts 33 are employed one for each of the conveyor halves 1a, but are driven by the single second drive unit 3.

As best shown in Fig. 4, a delivery means D3 for the delivery of the articles M is disposed outside the machine framework 6. This delivery means D3 is of a construction which will now be described.

The machine framework 6 includes a tubular support column 36 supported thereby so as to protrude upwardly. A third drive unit 5 in the form of, for example, an electrically operated reversible servo-motor, is rigidly secured exteriorly to an upper end portion of the tubular support column 36. A screw rod 10 extending in a direction parallel to the direction V perpendicular to the plane of such path A is rotatably supported within the hollow of the tubular support column 36 and has an upper end protruding generally outwardly from the upper end of the tubular support column 36. A driven pulley 38 is mounted on the upper end of the screw rod 10 for rotation together therewith and is in turn drivingly coupled with a drive pulley 37 rigid with a drive shaft of the third drive unit 5 by means of a generally endless belt 39 that is trained between the drive pulley 37 and the driven pulley 38. A suction holder 4, which is an example of a holder for holding the articles M, includes a vertically extending support conduit 40 having a lower end rigidly secured to the casing of the suction holder 4 and also having an upper end fluid-coupled with a flexible connecting tube 41 which in turn leads to a vacuum pump 45. The vertically extending support conduit 40 has a generally intermediate portion connected with a transversely extending support arm 42. A free end of the transversely extending support arm 42 loosely extends into the hollow of the tubular support column 36 through a vertically extending slot 44 defined in the wall of the tubular support column 36 and is drivingly coupled with the screw rod 10 by means of a nut 43. This nut 43 is rigidly secured to, or otherwise formed integrally with the free end of the support arm 42 and is also threadingly mounted on the screw rod 10, and therefore, it will readily be seen that rotation of the screw rod 10 results in a movement of the nut 43 along the screw rod 10 and, hence, a movement of the suction holder 4 between lifted and lowered positions in the direction V perpendicular to the plane of the path of conveyance.

The first to third drive units 2, 3 and 5 are servo-controlled by a common controller 46.

The package transport apparatus of the above described construction according to the first preferred embodiment of the present invention operates in the following manner.

So long as the package transport apparatus is not electrically powered on and is therefore held in an inactive state, the conveyor halves 1a disposed in side-by-side relation to each other are held horizontally while assuming the closed position as shown in Fig. 1. As shown in Fig. 2, a carton box 8 for packaging the articles is positioned at a predetermined location beneath the transport conveyor 1 while opening upwardly. While in this condition, and when the second drive unit 3 of the conveyor drive means D2 is activated, the drive belt 30 is driven in one direction around the pulleys 28 and 29, which in turn drives the drive belts 33 around the rolls 31 and 32. Since that portions of the respective drive belts 33 between the rolls 32 of the respective pairs are frictionally engaged with the conveyor belts 7, the drive of the drive belts 33 is transmitted to the conveyor belts 7 to drive the latter in a direction required to transport the articles M in the direction C. Therefore, a predetermined number of the articles M delivered from a suitable conveyance means (not shown) onto the transport conveyor 1 at an upstream side are transported by the transport conveyor 1 towards a predetermined position immediately above the carton box 8. Upon arrival of the articles M at the predetermined position immediately above the carton box 8, the second drive unit 3 is, under a servo-control, brought to a halt to hold the articles M at such predetermined position.

Subsequent to the arrival of the articles M at the predetermined position immediately above the carton box 8, and according to a sequence control, the third drive unit 5 of the delivery means D3 shown in Fig. 4 is activated to drive the screw rod 10 in a first direction by means of the drive belt 39 trained around the pulleys 37 and 38, thereby shifting the nut 43 downwardly along the screw rod 10. As the nut 43 is downwardly shifted along the screw rod 10, the support arm 42 rigid with the nut 43 is lowered accompanied by a corresponding downward movement of the suction holder 4 towards a catch position. As soon as the suction holder 4 is brought into contact with upper surfaces of the articles M, the third drive unit 5 is, udder a servo-control, brought to a halt to hold the suction holder 4 at the catch position, followed by an activation of the vacuum pump 45 to reduce the pressure inside the suction holder 4 so that the articles M can be sucked onto the suction holder 4.

Thereafter, the first drive units 2 of the open/close drive means D1 is activated to drive the rotary shafts 19 by means of the first cranking members 13, the connecting links 22 and the second cranking members 21, respectively, to pivot the conveyor halves 1a downwardly from the closed position to the opened position to thereby open the transport conveyor. The third drive unit 5 is then activated again to further lower the suction holder 4 past the catch position while the latter holds the articles M under suction, thereby loading the articles M into the carton box 8. In the event that at this time the suction holder 4 fails to operate properly, that is, to hold some or all of the articles M on the transport conveyor 1, the articles M which have not been sucked by the suction holder 4 can fall downwardly by gravity into the carton box 8 since the transport conveyor is opened with the conveyor halves 1 held in the opened position.

Simultaneously with the timing at which or as soon as the articles M held by the suction holder 4 have been loaded into the carton box 8 positioned at the predetermined location, the third drive unit 5 is deactivated under the servo-control to interrupt the further lowering of the suction holder 4, followed by release of a vacuum from the suction holder 4 to leave the articles M inside the carton box 8. Shortly thereafter, the third drive unit 5 is activated in a reverse sense so as to drive the screw rod 10 about the longitudinal axis thereof in a second direction opposite to the first direction thereof to thereby shift the suction holder 4 to the initial elevated position, and upon arrival of the suction holder 4 at the elevated position the third drive unit 5 is deactivated, followed by an activation of the first drive unit 2 of the open/close drive means D1 to close the transport conveyor 1, that is, to bring the conveyor halves 1a back to the closed position.

With the package transport apparatus of the present invention constructed as hereinabove described, the delivery means D3 shown in Fig. 4 is operable to hold the articles M then supported on the transport conveyor 1 and then to deliver the articles M directly to the predetermined location immediately beneath the transport conveyor 1 when the transport conveyor 1 is opened, without transferring the articles M in an upward direction and then in a lateral direction such as performed by the prior art apparatus. Accordingly, the time required for the articles M to be transferred is substantially reduced, accompanied by a corresponding increase in work efficiency. Even though the suction holder 4 fails to operate properly in holding the articles 4 under suction by some reason, or fails to provide a sucking force sufficient to hold the articles M under suction, the articles M left on the transport conveyor 1 can be automatically discharged downwardly when the transport conveyor 1 is opened, and therefore, the attendant worker need not exercise a manual job of removing the articles remaining on the transport conveyor such as frequently observed in the prior art apparatus.

Also, since the delivery means D3 transfer while holding the articles M under suction, the articles M can be delivered into and placed in order within the carton box 8 positioned immediately beneath the path A of conveyance, and this is quite different from the prior apparatus in which the articles are allowed to fall by gravity into a box. Moreover, since the delivery means 8 undergoes a mere movement only in a vertical direction perpendicular to the path A of conveyance, the package transport apparatus itself can be assembled with a simplified structure and compact in size. The fact that the transport conveyor 1 itself can be selectively opened and closed, no extra shutter assembly such as employed in the prior art apparatus is required for allowing the articles to fall therethrough, making it possible to manufacture the package transport apparatus of a simplified structure, and a small size.

According to the foregoing embodiment of the present invention, the transport conveyor 1 shown in Fig. 1 is comprised of the pair of conveyor halves 1a disposed in side-by-side fashion in a direction transverse to the direction C of conveyance, with each conveyor half 1a having the outer longitudinal side portion mounted on the associated rotary shaft 19 for pivotal movement together therewith about the longitudinal axis 19a of such associated rotary shaft 19 between the opened and closed positions. Accordingly, as shown in Fig. 5, each of the conveyor halves 1a can have a reduced width W as measured in a direction radially of the longitudinal axis 19a of the associated rotary shaft 19 as compared with a full-width belt conveyor, the time required for the respective conveyor half 1a to move from the closed position towards the opened position or from the opened position towards the closed position suffices to be small. Furthermore, since a longitudinal center area of the path A of conveyance is defined by the inner longitudinal side portions of the respective conveyor halves 1a, and since when the transport conveyor is opened that longitudinal center area of the path A of conveyance is opened earlier than the remaining area of the path A of conveyance, lowering of the articles subsequently performed by the delivery means D3 can be performed at an earlier timing, and the work efficiency is therefore increased.

Again, according to the foregoing embodiment of the present invention, since the conveyor belts 7 in Fig. 2 are automatically disengaged from the respective drive belts 33 of the conveyor drive means D2 when transport conveyor 1 is opened, but is automatically drivingly coupled with the respective drive belts 33 of the conveyor drive means D2 when the transport conveyor 1 is closed, no extra means for selectively coupling and decoupling the conveyor belts 7 with and from the conveyor drive means D2 is required, thereby rendering the apparatus as a whole to be simple in structure.

Yet, according to the foregoing embodiment of the present invention, the delivery means D3 best shown in Fig. 4 is operable to move the suction holder 4 up and down along the rotary screw rod 10 to which the suction holder 4 is coupled through the nut 43 threadingly mounted on such rotary screw rod 10. Therefore, the delivery means D3 can have a simplified structure and, in addition, since the holder moves up and down along the rotary screw rod 10 as the latter is rotated, the up-and-down motion of the holder can be performed accurately and smoothly.

### Second Preferred Embodiment

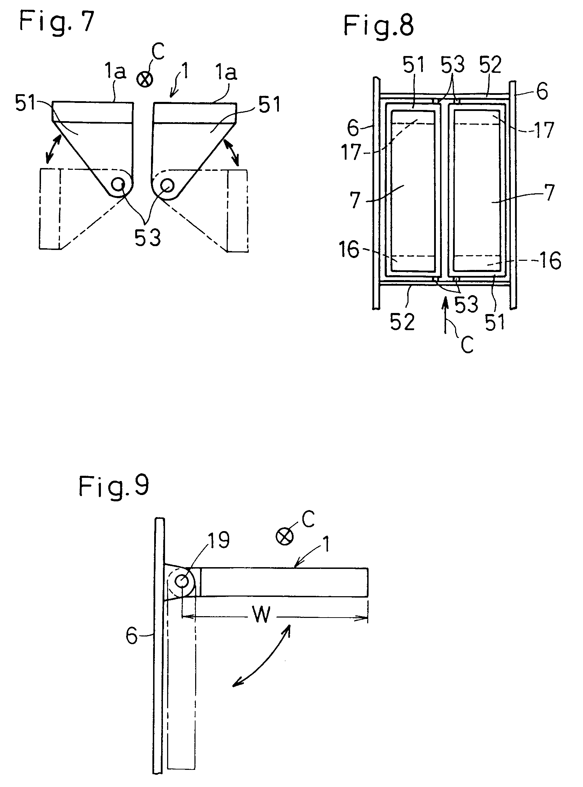

In the first preferred embodiment of the present invention shown in and described with reference to Figs. 1 to 6, the conveyor halves 1a have shown and described as pivotally supported for movement between the closed and opened positions by the respective rotary shafts 19 through the outer side frames 15. However, according to a second preferred embodiment of the present invention shown in Figs. 7 and 8, opposite inner end portions of a framework 51 supporting each of the conveyor halves 1a so as to surround the latter, which inner end portions are opposed to the respective ends of the associated conveyor half 1a are pivotally connected with corresponding transverse end support frames 52 of the machine framework 6 that extend perpendicular to the direction C of transport. More specifically, the machine framework 6 includes the opposite transverse end support frames 52 extending perpendicular to the direction C of transport. The opposite inner end portions of the framework 51 for the support of the associated conveyor half 1a are pivotally connected through respective stud shafts 53 with the transverse end support frames 52 such that the conveyor halves 1a as a whole can be pivoted between the closed and opened positions about respective common axes each extending coaxially between the associated stud shafts 53.

The package transport apparatus according to the second embodiment of the present invention brings about effects similar to those exhibited by that according to the first embodiment of the present invention.

### Third Preferred Embodiment

According to a third preferred embodiment of the present invention specifically shown in Fig. 9, the transport conveyor 1 is not divided such as that employed in any one of the first and second embodiments, but is of a unitary structure including a single conveyor belt. The transport conveyor 1 shown in Fig. 9 is supported at one of opposite longitudinal side portions thereof by a single rotary shaft 19, carried by the machine framework 6, for pivotal movement between a closed position, shown by the solid line, and an opened position shown by the phantom line about the longitudinal axis of the rotary shaft 19. In this third preferred embodiment of the present invention, the transport conveyor 1 has a full width which is greater than the width of each conveyor half such as employed in any one of the first and second embodiments of the present invention and, therefore, the transport conveyor 1 will take much time to pivot from one of the closed and opened position to the other of the closed and opened position. However, since the transport conveyor 1 is not divided as hereinabove described, the structure can be simplified.

Even the package transport apparatus according to the third embodiment of the present invention brings about effects similar to those exhibited by that according to the first embodiment of the present invention.

### Fourth Preferred Embodiment

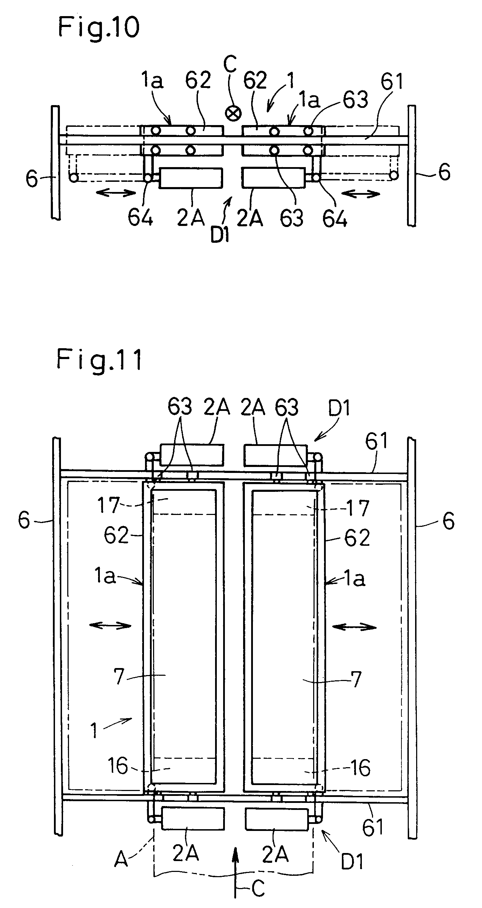

The package transport apparatus according to a fourth preferred embodiment of the present invention is shown in Figs. 10 and 11. In this embodiment, the conveyor halves 1a are supported for movement between a separated position, shown by the phantom lines in Figs. 10 and 11, and a closely adjoining position shown by the solid lines therein, in a horizontal plane parallel to the path A of conveyance. For this purpose, the machine framework 6 includes a pair of transverse guide rails 61 spaced endwise of the transport conveyor 1 and extending in a direction perpendicular to the direction C of transport. A generally rectangular framework 62 supporting the respective conveyor half 1a has a plurality of, for example, two, paired guide rollers 63 mounted on each of opposite ends of the rectangular framework 62. Each conveyor half 1a is mounted on the machine framework 6 with the guide rails 61 sandwiched between the upper guide rollers 63 and the lower guide rollers 63 as best shown in Fig. 10.

The conveyor halves 1a are operatively coupled with respective first drive units 2A such as a pneumatic operated cylinder by means of associated articulated links 64. Thus, it will be readily understood that, when the first drive units 2A are simultaneously in a first operative state, e.g., activated, the conveyor halves 1a can be moved away from each other in a direction perpendicular to the direction C of transport to assume the separated position shown by the phantom lines, but when the first drive units 2A are simultaneously in a second operative state opposite to the first operative state, that is, activated in a reverse sense, the conveyor halves 1a can be moved close towards each other in the direction perpendicular to the direction C of transport to assume the closely adjoining position shown by the solid lines.

According to the fourth embodiment of the present invention shown in and described with reference to Figs. 10 and 11, since the conveyor halves 1a undergo a sliding motion, not a pivotal motion, the movement of the transport conveyor 1 to open or close may take a long time. However, even the package transport apparatus according to this fourth embodiment of the present invention brings about effects similar to those exhibited by that according to the first embodiment of the present invention.

### Fifth Preferred Embodiment

In a fifth preferred embodiment of the present invention shown in Fig. 12, the rotary shafts 19 one for each of the conveyor halves 1a extend in a direction perpendicular to the direction C of transport with the conveyor halves 1a disposed in series with each other so as to be pivotable about the longitudinal axis of the respective rotary shafts 19. The conveyor drive means D2 for each of the conveyor halves 1a in this instance is adapted to be driven by the respective second drive units 3B each including a driven sprocket wheel 71 mounted rigidly on the associated rotary shaft 19 for rotation together therewith, a drive sprocket wheel 72 mounted on rigidly on a drive shaft of the respective second drive units 3B for rotation together therewith, and a generally endless chain belt 73 trained between the driven and drive sprocket wheels 71 and 72. Thus, it will readily be seen that, when the conveyor drive means D2 are activated, the respective endless belts 7 of the conveyor halves 1a can be driven in the same direction in synchronism with each other to transport the articles in the direction C of transport.

Even the package transport apparatus according to the fifth embodiment of the present invention can exhibit effects similar to those exhibited by the package transport apparatus according to the first embodiment of the present invention. However the conveyor drive means D2 employed in the fifth embodiment of the present invention are different in structure from those employed in the first embodiment of the present invention, in that the package transport apparatus according to the fifth embodiment of the present invention does not require the use of any releasable coupling means such as clutches since, regardless of whether the transport conveyor 1 is closed or opened, the conveyor drive means D2 are drivingly coupled with the respective conveyor halves 1a at all times.

### INDUSTRIAL APPLICABILITY

The package transport apparatus according to the present invention is suitably utilized as a transport apparatus for transporting not only the sealed bags containing food items such as candies, but also machine component parts either packaged or not packaged, or bags of machine component parts.

## Claims

1. A package transport apparatus for transferring articles, which have been transported along a path of conveyance, towards a predetermined location beneath the path of conveyance, which comprises:
a transport conveyor capable of being selectively closed and opened and disposed in said path of conveyance for transporting the articles towards the predetermined position when said transport conveyor is closed and for forming an opening opening in a vertical direction across the path of conveyance when said transport conveyor is opened;
an open/close drive means for selectively opening and closing the transport conveyor;
a conveyor drive means for running the transport conveyor; and
a delivery means for holding the articles which have been transported to the predetermined position and for delivering the articles to the predetermined location across the opening of the transport conveyor when the transport conveyor is opened.

2. The package transport apparatus as claimed in Claim 1, wherein said transport conveyor is supported for a pivotal movement about a pivot axis extending parallel to a direction of transport of the articles.

3. The package transport apparatus as claimed in Claim 1, wherein said transport conveyor comprises a pair of conveyor halves, each of said conveyor halves being supported for a pivotal movement about a respective pivot axis.

4. The package transport apparatus as claimed in Claim 3, wherein said conveyor halves are juxtaposed in side-by-side fashion in a direction transverse of the direction of transport of the articles, each of said conveyor halves being supported for a pivotal movement about the respective pivot axis extending parallel to the direction of transport of the articles.

5. The package transport apparatus as claimed in Claim 3, wherein each of said conveyor halves is supported at a respective portion thereof opposite to opposite portion confronting to the other of the conveyor halves for a pivotal movement about the respective pivot axis.

6. The package transport apparatus as claimed in Claim 4, further comprising a pair of rotary shafts rotatably supported by a machine framework and wherein said conveyor halves are mounted on said rotary shafts, respectively, for rotation together therewith.

7. The package transport apparatus as claimed in Claim 1, wherein said transport conveyor is supported for movement in a direction parallel to the path of conveyance of the articles.

8. The package transport apparatus as claimed in Claim 1, wherein said transport conveyor includes a generally endless conveyor belt for support thereon of the articles, and wherein said conveyor drive means includes a drive belt means disengageable from said conveyor belt when the transport conveyor is opened and engageable with said conveyor belt, when the transport conveyor is closed, to drive the conveyor belt.

9. The package transport apparatus as claimed in Claim 4, wherein said transport conveyor includes a generally endless conveyor belt for support thereon of the articles, and wherein said conveyor drive means includes a drive belt for each of the conveyor halves, said drive belt being disposed downstream of the transport conveyor with respect to the direction of transport of the articles and engageable with said conveyor belt when the transport conveyor is closed, and a common drive unit for driving the drive belt of both of said conveyor halves.

10. The package transport apparatus as claimed in Claim 1, wherein said delivery means includes a screw rod extending vertically and rotatable about its own longitudinal axis, and a holder threadingly mounted on the screw rod for movement up and down along the screw rod.

11. The package transport apparatus as claimed in Claim 1, wherein said delivery means includes a suction holder for holding the articles under suction.
